(19) Europäisches Patentamt / European Patent Office / Office européen des brevets

(11) **EP 4 537 333 B1**

(12) **EUROPEAN PATENT SPECIFICATION**

(45) Date of publication and mention
of the grant of the patent:
**29.04.2026 Bulletin 2026/18**

(21) Application number: **23731641.9**

(22) Date of filing: **07.06.2023**

(51) International Patent Classification (IPC):
**G10L 25/30** *(2013.01)* **G10L 21/0208** *(2013.01)*
**G06N 3/08** *(2023.01)* **G10L 19/26** *(2013.01)*
**G10L 21/02** *(2013.01)*

(52) Cooperative Patent Classification (CPC):
**G10L 21/02**

(86) International application number:
**PCT/EP2023/065312**

(87) International publication number:
**WO 2023/237640 (14.12.2023 Gazette 2023/50)**

(54) **USE OF A LOSS TERM CONDITIONED NEURAL NETWORK FOR PROCESSING OF AUDIO**

VERWENDUNG EINES VERLUSTBEDINGTEN NEURONALEN NETZWERKS ZUR
VERARBEITUNG VON AUDIO

UTILISATION D'UN RÉSEAU NEURONAL CONDITIONÉ PAR UN TERME DE PERTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.06.2022 US 202263350099 P
08.06.2022 EP 22177849**

(43) Date of publication of application:
**16.04.2025 Bulletin 2025/16**

(73) Proprietor: **Dolby International AB
Dublin, D02 VK60 (IE)**

(72) Inventor: **BISWAS, Arijit
San Francisco, California 94103 (US)**

(74) Representative: **Dolby International AB
Patent Group Europe
77 Sir John Rogerson's Quay
Block C
Grand Canal Docklands
Dublin, D02 VK60 (IE)**

(56) References cited:
**WO-A1-2021/245015**

- **POLYAK ADAM ET AL: "High Fidelity Speech
Regeneration with Application to Speech
Enhancement", ICASSP 2021 - 2021 IEEE
INTERNATIONAL CONFERENCE ON
ACOUSTICS, SPEECH AND SIGNAL
PROCESSING (ICASSP), IEEE, 6 June 2021
(2021-06-06), pages 7143 - 7147, XP033955129,
DOI: 10.1109/ICASSP39728.2021.9414853**
- **RAM SARAVANA RAM ET AL: "Speech
enhancement through improvised conditional
generative adversarial networks",
MICROPROCESSORS AND MICROSYSTEMS,
IPC BUSINESS PRESS LTD. LONDON, GB, vol.
79, 24 September 2020 (2020-09-24),
XP086396364, ISSN: 0141-9331, [retrieved on
20200924], DOI: 10.1016/J.MICPRO.2020.103281**
- **JAN ZUIDERVELD ET AL: "Towards Lightweight
Controllable Audio Synthesis with Conditional
Implicit Neural Representations", ARXIV.ORG,
CORNELL UNIVERSITY LIBRARY, 201 OLIN
LIBRARY CORNELL UNIVERSITY ITHACA, NY
14853, 2 December 2021 (2021-12-02),
XP091111387**

**Description**

CROSS REFERENCE TO RELATED APPLICATIONS

This application claims benefit of priority to U.S. Provisional Application No. 63/350,099, filed June 08, 2022, and EP Application No. 22177849.1, filed June 08, 2022.

TECHNOLOGY

The present disclosure relates generally to a method of loss conditional training of a neural network. In particular, a coefficient vector is randomly sampled from a distribution of coefficients and the neural network is conditioned based on the coefficient vector. The present disclosure further relates to a computer-implemented method of processing an audio signal using a loss conditional trained neural network. The present disclosure relates moreover also to a respective apparatus and respective computer program products.

While some embodiments will be described herein with particular reference to that disclosure, it will be appreciated that the present disclosure is not limited to such a field of use and is applicable in broader contexts.

BACKGROUND

Any discussion of the background art throughout the disclosure should in no way be considered as an admission that such art is widely known or forms part of common general knowledge in the field.

Audio quality perceived by human is a core performance metric in many audio devices. An audio codec is a computer program designed to encode and decode a digital audio stream. To be more precise, it compresses and decompresses digital audio data to and from a compressed format with the help of codec algorithms. Audio codec intends to reduce the storage space and bandwidth while keeping a high-fidelity of transmitted signals. Lossy compression methods, however, introduce coding artifacts that may impair the quality of the audio.

Deep learning approaches have become more and more attractive in various fields of application including audio enhancement. Most of the deep learning approaches up to now relate to speech denoising.

As to denoising in general, intuitively one may consider coding artifact reduction and de-noising to be highly related. However, removal of coding artifacts/noise that are highly correlated to the desired sounds appears to be more complicated than removing other noise types (in de-noising application) that are often less correlated. The characteristics of coding artifacts depend on the codec and the employed coding tools, and the selected bitrate. In addition, modelling audio signals that comprise tonal content, such as speech and music, is even more complicated due to periodic functions naturally included in this kind of signals.

Deep convolutional models used to reduce coding artifacts and coding noise are, however, quite complex in terms of model parameters and/or memory usage thus introducing per se a high computational load. Moreover, if different signal categories such as, for example, speech, music, a mix of speech and music, and applause, as well as bitrates and codecs need to be covered, typically separate models are trained with each model giving the best possible performance for each task.

WO2021245015A1 describes a method of determining parameters for a generative neural network for processing an audio signal, wherein the generative neural network includes an encoder stage mapping to a coded feature space and a decoder stage, each stage including a plurality of convolutional layers with one or more weight coefficients, the method comprising a plurality of cycles with sequential processes of: pruning the weight coefficients of either or both stages based on pruning control information, the pruning control information determining the number of weight coefficients that are pruned for respective convolutional layers; training the pruned generative neural network based on a set of training data; determining a loss for the trained and pruned generative neural network based on a loss function; and determining updated pruning control information based on the determined loss and a target loss.

POLYAK ADAM et al: 'High Fidelity Speech Regeneration with Application to Speech Enhancement' proposes a wav-to-wav generative model for speech that can generate 24khz speech in a realtime manner and which utilizes a compact speech representation, composed of ASR and identity features, to achieve a higher level of intelligibility.

RAM SARAVANA RAM at al: 'Speech enhancement through improvised conditional generative adversarial networks', proposes to use an improvised conditional generative adversarial network where the generator will enhance the input data that is noisy while the discriminator on the other handembedded with improvised techniques will try to differentiate between the generator output and the database clean content with the help of GAN conditions discussed.

In view of the above, there is thus an existing need for improving single models towards a more arbitrary input covering different categories and conditions.

SUMMARY

The invention provides a computer-implemented method according to claim 1, an apparatus according to claim 13, a computer program according to claim 14 and a computer-readable storage medium according to claim 15. Preferable aspects are defined by the dependent claims.

BRIEF DESCRIPTION OF THE DRAWINGS

Example embodiments of the disclosure will now be described, by way of example only, with reference to the accompanying drawings in which:

FIG. 1 illustrates an example of a method of loss conditional training of a neural network.
FIG. 2 illustrates an example of loss conditional training in a generative adversarial network, GAN, setting including a generator and a discriminator.
FIG. 3 illustrates schematically an example of a simple architecture of a generator.
FIG. 4 illustrates an example of a computer-implemented method of processing an audio signal using a loss conditional trained neural network.
FIG. 5 illustrates a further example of a computer-implemented method of processing an audio signal using a loss conditional trained neural network.
FIG. 6 illustrates an example of an apparatus including one or more processors.

DESCRIPTION OF EXAMPLE EMBODIMENTS

*Overview*

In deep learning-based approaches for (coded) audio enhancement, the performance of a neural network (model) generally depends not on a single, but on several properties. An approach to training a neural network is to balance different properties by minimizing a loss function that is a weighted sum of the terms measuring those properties. Depending on the coefficients of these weights, training with this loss function results in a model that is best suitable for certain content types, bitrates or codecs.

If it is, however, desired to cover different signal categories, for example, speech, music, a mix of speech and music, and applause, as well as different bitrates, and codecs, typically several separate neural networks with different weighting coefficients in the loss function are trained to obtain the best possible performance for each category. This requires keeping multiple neural networks both during training and inference, which is computationally expensive both at training and at inference time.

Methods and apparatus described herein propose a loss conditional training and inferencing strategy, that allows training and inferencing a single neural network for tasks that would normally require a large set of separately trained neural networks. This is based on the approach that if all of these separate neural networks solve very related problems, some information could be shared between them. A loss function has coefficients to be tuned, the described methods allow training and using a single neural network covering a wide range of these coefficients. This offers a simple way to avoid inefficiency and to cover all trade-offs with a single neural network in cases where usually a set of neural networks optimized for different losses is needed. That is, enhanced outputs can be generated with a single neural network by varying the conditioning values.

*Method of loss conditional training of a neural network*

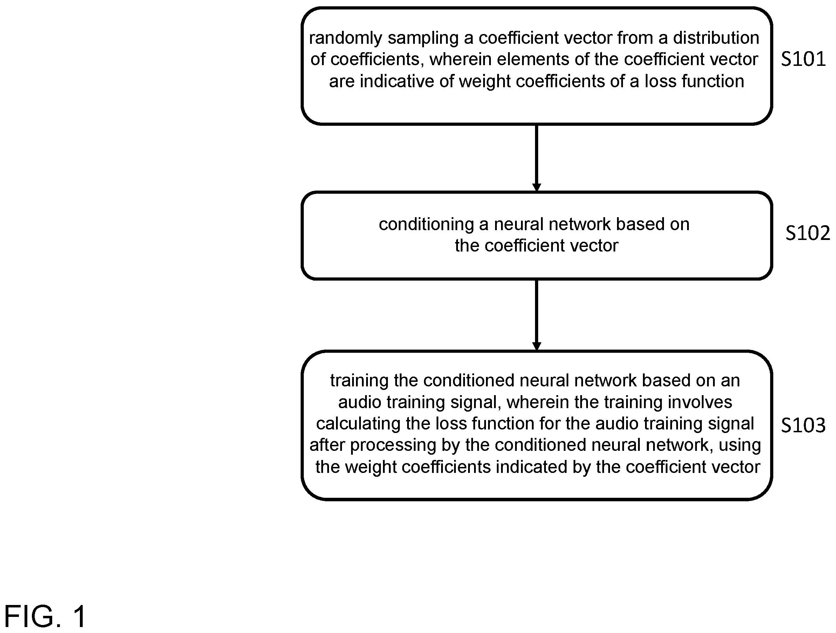

Referring to the example of Figure 1, a method of loss conditional training of a neural network, useful for understanding the invention, is illustrated. The loss conditional training may involve conditioning the neural network (model) on a loss function which has weight coefficients $\lambda$ corresponding to the loss terms. For example, the loss function may consist of 4 terms, 3 reconstruction terms, and an adversarial term responsible for the generative property of the neural network. The reconstruction terms regulate how much the enhanced signal generated by the neural network should be similar to the original signal, while the adversarial losses define the amount of generative character that should get carried over to the enhanced signal. The weight coefficients $\lambda$ thus may be said to balance/regulate the ratio of the terms in the loss function. That is, for a single task to be performed/a single condition, there may be a single set (ordered set) of weight coefficients $\lambda$ that determine the optimized loss function for that task/condition. In a similar manner there also may be a set of weight coefficients $\lambda$ that determine the optimized loss function that works for multiple tasks/conditions. For the neural network to choose/find a set of weight coefficients $\lambda$ that works best for multiple tasks/conditions, training may involve covering a wide range of different sets of weight coefficients that may be realized by sampling respective vectors from a respective distribution as detailed below. Training may further involve covering different loss functions (determined by different weight coefficients) and/or different conditions such as different content type/bitrate/codec.

To train a single neural network to cover a wide range of coefficients, in step S101, a coefficient vector is randomly sampled from a distribution of coefficients. Elements of the coefficient vector may be indicative of weight coefficients of a loss function. The coefficient vector may be said to represent an ordered set of weight coefficients of a loss function. The number of weight coefficients in a set being determined by the number and/or the weighting of the terms in a respective loss function. The distribution of coefficients may thus be said to represent a distribution of loss functions. This enables training a single neural network on a family of loss functions. The term loss function, as used herein, may also be said to be a generator loss function.

In some embodiments, the generator loss function may be a multi-objective loss function, for example, the generator loss function may include a multi-resolution STFT loss function as given in equation (2) further below. Results show that a multi-resolution STFT-based generator loss function provides quality improvement towards handling a variety of signal categories. In other words, if a single neural network is trained, for example, on a variety of signal categories that may, for example, be realized by training the neural network on different audio training signals, quality improvement can be achieved if the coefficient vector is randomly sampled from a distribution of weight coefficients for a multi-objective loss function.

In some embodiments, the distribution of the coefficients may be a uniform distribution in a predetermined range. That is, each element may be sampled, for example, from a (1D) distribution in range [0,100]. In this case, no subsequent normalization of the vector is required, as the normalization may be said to be included as part of the weighting.

Referring again to the example of Figure 1, once the coefficient vector has been sampled, in step S102, the neural network is then conditioned based on said coefficient vector. The conditioning may be performed via a conditioning network. That is, computation carried out by the neural network may be conditioned or modulated by the coefficient vector. In some embodiments, conditioning the neural network may include Feature-wise Linear Modulation, FiLM. That is, FiLM layers may be introduced into the architecture of the neural network, the layers being parametrized by the conditioning based on the coefficient vector. For example, the randomly sampled conditioning vector $\lambda$ may be fed to two multi-layer perceptron (MLP) networks and creates vectors $\sigma(\lambda)$ and $\mu(\lambda)$ of the same dimension as the number of feature maps at the output of the convolutional/transposed layers that are modulated/conditioned. Each feature map is first scaled by $\alpha(\lambda)$. Then, the scaled feature maps are shifted by $\mu(\lambda)$.

Once the neural network has been conditioned, in step S103, the conditioned neural network is then trained based on an audio training signal. The training may involve calculating the loss function for the audio training signal after processing by the conditioned neural network, using the weight coefficients indicated by the coefficient vector. In some embodiments, training the conditioned neural network may be performed in the perceptually weighted domain.

The method as described enables the neural network to learn modelling the entire family of loss functions. Architecture and training of the neural network are detailed further below.

*Architecture of a neural network*

It is noted that the above-described method can be performed using any neural network, the architecture of the neural network is thus not limited. However, in some embodiments, the neural network may implement a deep-learning based generator, the generator comprising an encoder stage and a decoder stage, each including multiple layers with one or more filters in each layer, the last layer of the encoder stage mapping to a latent feature space.

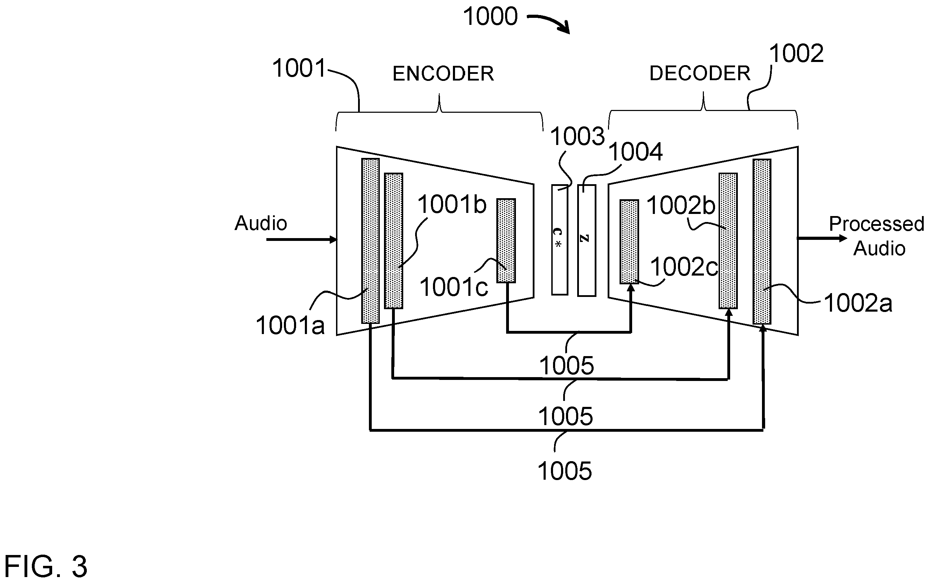

A non-limiting example of a simple architecture of a generator is illustrated schematically in the example of Figure 3. The generator, 1000, includes an encoder stage, 1001, and a decoder stage, 1002. The encoder stage, 1001, and the decoder stage, 1002, of the generator, 1000, may be fully convolutional. The decoder stage, 1002, may mirror the encoder stage, 1001. The encoder stage, 1001, as well as the decoder stage, 1002, each may include multiple layers, 1001a, 1001b, 1001c, 1002a, 1002b, 1002c, with a plurality of filters in each layer, wherein the plurality of filters in each layer of the decoder stage may perform a filtering operation generating a plurality of feature maps, and the last layer of the encoder stage, 1001, may map to a latent feature space representation c*, 1003.

That is, the encoder stage, 1001, and the decoder stage, 1002, each may include a number of L layers, with a number of N filters in each layer L. L may be a natural number $\geq 1$ and N may be a natural number $\geq 1$. While the size (also known as kernel size) of the N filters is not limited, the filter size may, however, be the same in each of the L layers, for example, the filter size may be 31. In each layer the number of filters may increase. Each of the filters may operate on the audio signal that is input into each of the layers of the generator with a stride of 2, for example. Thus, a learnable down-sampling by a factor of 2 may be performed in the encoder layers and a learnable up-sampling by a factor of 2 may be performed in the decoder layers. In other words, the encoder stage, 1001, of the generator may include multiple 1D-convolutional layers (without bias terms) with a stride of 2 and the decoder stage, 1002, of the generator may include multiple 1D-transposed convolutional layers (without bias terms) with a stride of 2.

In some embodiments, the conditioning the neural network may involve conditioning on one or more layers of the encoder stage of the generator adjacent to the latent feature space. In some embodiments, this conditioning may be FiLM conditioning as described above.

In at least one layer of the encoder stage, 1001, a non-linear operation may be performed in addition as an activation including one or more of a parametric rectified linear unit (PReLU), a rectified linear unit (ReLU), a leaky rectified linear unit (LReLU), an exponential linear unit (eLU) and a scaled exponential linear unit (SeLU). For example, the non-linear operation may be based on PReLU.

The generator, 1000, may further include, in an embodiment, a non-strided (stride = 1) transposed convolutional layer as an output layer following a last layer, 1002a, of the decoder stage, 1002. The output layer may, for example, include N = 1 filters in case of a mono audio signal and, for example, N = 2 filters for a stereo audio signal as an example of a multi-channel audio signal. The filter size may be 31. In the output layer, the activation may be based on a tanh operation, $\tanh(x)$ activation, as the audio signal output from the decoder stage, 1002, needs to be restricted to +1 and -1.

As illustrated in the example of Figure 3, in an embodiment, one or more skip connections, 1005, may exist between respective homologous layers of the encoder stage, 1001, and the decoder stage, 1002, of the generator, 1000. In this, the latent feature space representation c*, 1003, may be bypassed preventing loss of information. The skip connections, 1005, may be implemented using one or more of concatenation and signal addition. Due to the implementation of skip connections, 1005, the number of filter outputs may be "virtually" doubled.

In an embodiment, a random noise vector z, 1004, may further be applied to the latent feature space representation c*, 1003, for modifying audio.

*Architecture of a Discriminator*

As described above, in some embodiments, the generator may be a generator trained in a Generative Adversarial Network setting (GAN setting). A GAN setting generally includes the generator G and a discriminator D which are trained by an iterative process. The architecture of the discriminator may have the same structure as the encoder stage of the generator. In other words, the discriminator architecture may mirror the structure of the encoder stage of the generator, however, without conditioning. That is, the discriminator may include multiple layers with a plurality of filters in each layer. That is, the discriminator may include a number of L layers, with a number of N filters in each layer L. L may be a natural number $\geq 1$ and N may be a natural number $\geq 1$. While the size (also known as kernel size) of the N filters is not limited, the filter size may, however, be the same in each of the L layers, for example, the filter size may be 31. In each layer the number of filters may increase. Each of the filters may operate on the audio signal input into each of the layers of the discriminator with a stride of 2, for example. In other words, the discriminator may include multiple 1D-convolutional layers (without bias terms) with a stride of 2. A non-linear operation performed in at least one of the layers of the discriminator may include LReLU. Prepending, the discriminator may include an input layer. The input layer may be a non-strided convolutional layer (stride = 1 implying non-strided). The discriminator may further include an output layer. The output layer may have N = 1 filters (the discriminator makes a single real/fake judgement) having a filter size of 1. In this, the filter size of the output layer may be different from the filter size of the discriminator layers. The output layer may thus be a one-dimensional (1D) convolution layer that does not down-sample hidden activations. This means that the filter in the output layer may operate with a stride of 1 while all previous layers of the discriminator may use a stride of 2. The activation in the output layer may be different from the activation in the at least one of the discriminator layers. The activation may be sigmoid. However, if a least squares training approach is used, sigmoid activation may not be required and is therefore optional.

*Method of loss conditional training of a generator in a Generative Adversarial Network (GAN) setting*

In the following, loss conditional training of a generator in a Generative Adversarial Network setting (GAN setting) will be described. In general, during training in the Generative Adversarial Network setting, the generator G generates a processed audio training signal x* by mapping to a latent feature space representation, using the encoder stage, and upsampling the latent feature space representation, using the decoder stage. The audio training signal may be derived from an original audio signal x that has been coded and decoded, respectively. A random noise vector may be applied to the latent feature space representation. The random noise vector may, however, be set to z = 0. For coding artifact reduction setting the random noise vector to z = 0 may yield the best results. Alternatively, training may be performed without the input of a random noise vector z.

During training, the generator G tries to output a processed audio training signal x* that is indistinguishable from the original audio signal x. The discriminator D is one at a time fed with the generated processed audio training signal x* and the original audio signal x and judges in a fake/real manner whether the input signal is the processed audio training signal x* or the original audio signal x. In this, the discriminator D tries to discriminate the original audio signal x from the processed audio training signal x*. During the iterative process, the generator G then tunes its parameters to generate a better and better processed audio training signal x* as compared to the original audio signal x and the discriminator D learns to better judge between the processed audio training signal x* and the original audio signal x. This adversarial learning process may be described by the following equation (1):

$$\min_{G} \max_{D} V(D, G) = \mathbb{E}_{\mathbf{x} \sim p_{data}(\mathbf{x})}[\log D(\mathbf{x})] + \mathbb{E}_{\mathbf{z} \sim p_{\mathbf{z}}(\mathbf{z})}[\log(1 - D(G(\mathbf{z})))]$$

$$(1)$$

It shall be noted that the discriminator D may be trained first in order to train the generator G in a final step. Training and updating the discriminator D may involve maximizing the probability of assigning high scores to the original audio signal x, and low scores to the processed audio training signal x*. The goal in training of the discriminator D may be that the original audio signal (uncoded) is recognized as real while the processed audio training signal x* (generated) is recognized as fake. While the discriminator D is trained and updated, the parameters of the generator G may be kept fixed.

Training and updating the generator G may then involve minimizing the difference between the original audio signal x and the generated processed audio training signal x*. The goal in training the generator G may be to achieve that the discriminator D recognizes the generated processed audio training signal x* as real.

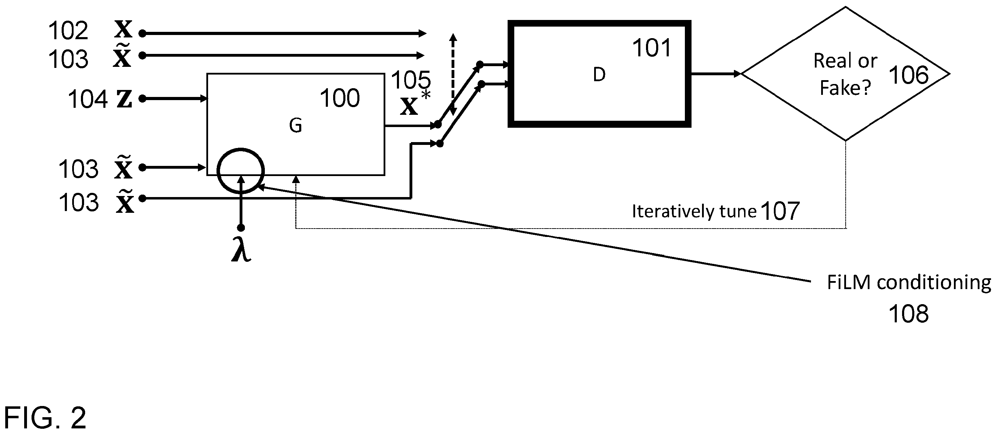

Referring to the example of Figure 2, loss conditional training of a generator in a generative adversarial network, GAN, setting including the generator and a discriminator is illustrated. Loss conditional training of the generator G, 100, may involve the following.

A coefficient vector $\lambda$ is randomly sampled from a distribution of coefficients p($\lambda$). The distribution may be uniform in the range [0,100]. The coefficient vector may be said to represent an ordered set of weight coefficients $\lambda$ of a respective loss function. The number of weight coefficients in a set being determined by the number and/or the weighting of the terms in a respective loss function. The distribution of coefficients may thus be said to represent a distribution of loss functions. In one example, elements of the coefficient vector may be independently sampled from the predetermined range (e.g., range [0,100]).

Once the coefficient vector has been sampled, the generator G, 100, is then conditioned based on said coefficient vector, 108. The conditioning may include Feature-wise Linear Modulation, FiLM. In some embodiments, conditioning the neural network may involve conditioning on one or more layers of the encoder stage of the generator adjacent to the latent feature space. That is, for example, only the one or more layers of the encoder stage may be modulated by FiLM conditioning as described above.

An audio training signal $\tilde{x}$, 103, and optionally a random noise vector z, 104, may be input into the (FiLM) conditioned generator G, 100. In an embodiment, the random noise vector z, may be set to z = 0. Alternatively, training may be performed without the input of a random noise vector z.

The audio training signal $\tilde{x}$, 103, may be obtained by coding and decoding an original audio signal, x, 102. Based on the input, the conditioned generator G, 100, then generates a processed audio training signal x*, 105, by mapping to the latent feature space representation, using the encoder stage, and upsampling the latent feature space representation, using the decoder stage.

One at a time, the original audio signal x, 102, from which the audio training signal $\tilde{x}$, 103, has been derived, and the generated processed audio training signal x*, 105, are input into the discriminator D, 101. As additional information, also the audio training signal $\tilde{x}$, 103, may be input each time into the discriminator D, 101. The discriminator D, 101, then judges, 106, whether the input data is the processed audio training signal x*, 105, (fake) or the original audio signal x, 102 (real).

In a next step, the parameters of the conditioned generator G, 100, are then tuned until the discriminator D, 101, can no longer distinguish the processed audio training signal x*, 105, from the original audio signal x, 102. This may be done in an iterative process, 107.

Judging by the discriminator D, 101, may be based on one or more of a perceptually motivated objective function as according to the following equation (2):

$$\mathcal{L}_{G} = \frac{1}{2} \mathbb{E}_{\mathbf{z} \sim p_{z}(\mathbf{z}), \tilde{x} \sim p_{data}(\tilde{x})}[(D(\mathbf{x}^{*}, \tilde{\mathbf{x}}) - 1)^{2}] + \mathbb{E}_{\lambda \sim p_{\lambda}(\lambda)} \left[ \lambda_{1} \|\boldsymbol{x}^{*} - \boldsymbol{x}\|_{1} + \lambda_{2} \frac{1}{M} \sum_{m=1}^{M} L_{sc}^{m}(\boldsymbol{x}, \boldsymbol{x}^{*}) + \right.$$

$$\left. \lambda_{3} \frac{1}{M} \sum_{m=1}^{M} L_{mag}^{m}(\boldsymbol{x}, \boldsymbol{x}^{*}) \right]$$

$$(2)$$

As can be seen from the first term in equation (2), a conditioned Generative Adversarial Network setting has been applied by inputting the audio training signal $\tilde{x}$ as additional information into the discriminator.

The two terms in the above (generator loss function) equation (2) including the coefficients $\lambda_2$ and $\lambda_3$ may be referred to as a multi-resolution STFT loss term. The multi-resolution STFT loss may be said to be the sum of different STFT-based loss functions using different STFT parameters. $L_{sc}^m$ (spectral convergence loss) and $L_{mag}^m$ (log-scale STFT magnitude loss) may apply the STFT-based loss at M different resolutions with number of FFT bins $\in$ {512, 1024, 2048}, hop sizes $\in$ {50, 120, 240}, and lastly window lengths $\in$ {240, 600, 1200}, respectively. Results showed that for handling general audio (i.e. any content type), the multi-resolution STFT loss term provides quality improvement.

The term in equation (2) including the coefficient $\lambda_1$ is a 1-norm distance scaled by the factor lambda $\lambda_1$. The value of this lambda may be chosen of from 1 to 100 depending on the application and/or signal length that is input into the generator. For example, $\lambda_1$ may be chosen to be $\lambda_1 = 100$. Furthermore, the scaling for the multi-resolution STFT loss term may be set to the same value as lambda.

The term $\mathbb{E}_{\lambda \sim p_\lambda(\lambda)}$ further indicates the random sampling of the coefficient vector $\lambda$ from the distribution p($\lambda$). In case of the multi-resolution STFT-based generator loss function, elements of the coefficient vector are thus indicative of the weight coefficients $\lambda_1$ to $\lambda_3$.

Alternatively, the generator loss function of equation (2) may be applied in the following form:

$$\mathcal{L}_G= \mathbb{E}_{\lambda \sim p_\lambda(\lambda)} \left[ \lambda_0 \frac{1}{2} \mathbb{E}_{\mathbf{z} \sim p_z(\mathbf{z}), \tilde{x} \sim p_{data}(\tilde{x})}[(D(\mathbf{x}^*, \tilde{\mathbf{x}}) - 1)^2] + \lambda_1 \| x^* - x \|_1 \right] +$$

$$\lambda_2 \frac{1}{M} \sum_{m=1}^M L_{sc}^m(x, \, x^*) + \lambda_3 \frac{1}{M} \sum_{m=1}^M L_{mag}^m(x, \, x^*) \Big]$$

$$(2a)$$

In the above equation, the term $\mathbb{E}_{\lambda \sim p_\lambda(\lambda)}$ has been made to also cover the adversarial term (i.e., the first term in the right-hand-side of equation (2)). In addition, equation (2a) thus further includes a weighting term $\lambda_0$ in front of the adversarial term. In general, any term of the loss function may have an associated weighting term (weight coefficient), where the weighting terms are indicated by the coefficient vector $\lambda$ which may be said to represent a set (ordered set) of the weight coefficients. It is understood that the coefficient vector $\lambda$ is chosen to have appropriate dimension to indicate all weighting terms for the envisaged loss function.

In some embodiments, training the conditioned neural network (the conditioned generator) may be performed in the perceptually weighted domain. A perceptually weighted audio training signal, $\tilde{x}$, may then be input into the conditioned generator G, 100. The perceptually weighted audio training signal, $\tilde{x}$, may be obtained by coding and decoding a perceptually weighted original audio signal, x, the perceptually weighted original audio signal, x, being derived by applying a mask or masking curve, P, to an original audio signal, the mask or masking curve indicating masking thresholds derived from a psychoacoustic model. Based on the input, the conditioned generator G, 100, then generates a processed perceptually weighted audio training signal, x*. In this case, the perceptually weighted original audio signal x, from which the perceptually weighted audio training signal $\tilde{x}$, has been derived, and the generated processed perceptually weighted audio training signal x*, are input into the discriminator D, 101.

In some embodiments, randomly sampling the coefficient vector, conditioning the neural network, and training the conditioned neural network may form at least part of an epoch, and the method may further include performing two or more epochs for each of a set of audio content types. A set of audio content types may include, for example, one or more of speech, music, speech and music, and applause. In performing the two or more epochs for each of a set of audio content types, the neural network can be trained with multiple conditions. During the training with multiple conditions, the neural network "sees" a distribution of weight coefficients and "chooses" the best coefficient vector that works best across the multiple conditions. It is to be noted that besides the audio content types, the multiple conditions may also include one or more of a set of bitrates and a set of codecs.

For example, in each epoch, an original audio signal is taken from a set of audio samples relating to a content type. Then, a coefficient vector is randomly sampled and used to condition the neural network (generator). The conditioned neural network then processes the respective audio training signal, and a loss function is calculated for the processed audio training signal, wherein the weight coefficients of the loss function are given by the coefficient vector $\lambda$. Training is then continued until the value of the calculated loss function is minimized as described above. That is, in each epoch, for each pair of an audio training signal derived from the original audio signal that had been taken from the set of audio samples, and of a randomly sampled coefficient vector, the parameters of the conditioned generator are tuned until the discriminator can no longer distinguish the processed audio training signal from the original audio signal. In performing two or more epochs for each of a set of audio content types, the single model can be trained to cover different signal categories. For each signal category, the training then, however, results in a best possible coefficient vector. In a similar manner, one or more epochs may also be performed for a set of bitrates and/or codecs. For example, a neural network may be trained first on a set of audio content types as described above. The same neural network may subsequently be trained further on a set of bitrates and/or on a set of codecs or vice versa. This way of training yields a single coefficient vector that works best for the multiple conditions experienced during training. However, this way of training also enables the single neural network during inference to "remember", for one particular condition (bitrate/codec/content type), which coefficient vector yielded the best results during training. During inference, this vector may then be chosen/included in the conditioning information based on the respective bitrate/content type/codec.

Referring again to the example of Figure 2, in general, training of the discriminator D, 101, may follow the same general process as described above for the training of the generator G, 100, except that in this case the parameters of the generator G, 100, may be fixed while the parameters of the discriminator D, 101, may be varied. The training of the discriminator D, 101, may be described by the following equation (3) that enables the discriminator D, 101, to determine the processed audio training signal x*, 105, as fake:

$$\min_{D} V_{LS-GAN}(D) = \frac{1}{2}\mathbb{E}_{x,\tilde{x}\sim p_{data}(x,\tilde{x})}[(D(\boldsymbol{x},\ \tilde{\boldsymbol{x}}) - 1)^2] + \frac{1}{2}\mathbb{E}_{\boldsymbol{z}\sim p_z(\boldsymbol{z}),\tilde{x}\sim p_{data}(\tilde{x})}[D(\boldsymbol{x}^*,\tilde{\boldsymbol{x}})^2]$$

In the above case, also the least squares approach (LS) and a conditioned Generative Adversarial Network setting has been applied by inputting the audio training signal $\tilde{x}$ as additional information into the discriminator D, 101.

Besides the least squares approach, also other training methods may be used for training the conditioned generator and the discriminator in a Generative Adversarial Network setting. The present disclosure is not limited to a particular training method. Alternatively, or additionally, the so-called Wasserstein approach may be used. In this case, instead of the least squares distance the Earth Mover Distance also known as Wasserstein Distance may be used. In general, different training methods make the training of the conditioned generator and the discriminator more stable. The kind of training method applied, does, however, not impact the architecture of the (conditioned) generator.

*Method of processing an audio signal using a loss conditional trained neural network*

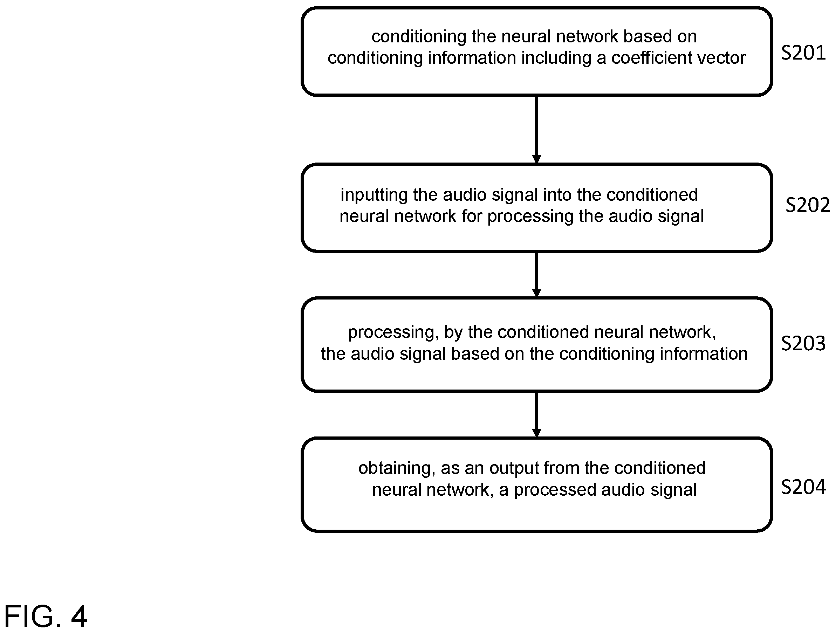

Referring to the example of Figure 4, a computer-implemented method of processing an audio signal using a loss conditional trained neural network, according to the claimed invention, is illustrated. In step S201, the neural network is conditioned based on conditioning information including a coefficient vector. In some embodiments, as described above, elements of the coefficient vector may be indicative of weight coefficients of a loss function. In some embodiments, the loss function may be a multi-objective loss function as, for example, the multi-resolution STFT-based generator loss function of equation (2).

In some embodiments, the conditioning information may be based on (determined by) a content type and/or a bitrate of the audio signal to be processed. The conditioning information may be further be chosen depending on the training results, for example based on which coefficient vector worked best. As described above, the loss conditional trained neural network may have been trained by performing two or more epochs for each of a set of audio content types in order to enable the neural network to cover a wide variety of different categories and conditions. In a similar manner this may be applicable to bitrates and/or codecs. That is, the conditioning information may alternatively or additionally also be based on a codec.

In some embodiments, conditioning the neural network may include Feature-wise Linear Modulation, FiLM, as described above. In some embodiments, the neural network may implement a deep-learning based generator. The generator may comprise an encoder stage and a decoder stage, each including multiple layers with one or more filters in each layer, the last layer of the encoder stage mapping to a latent feature space. The conditioning the neural network may then involve conditioning on one or more layers of the encoder stage of the generator adjacent to the latent feature space.

Further, in some embodiments, a random noise vector z may be applied to the latent feature space for modifying audio.

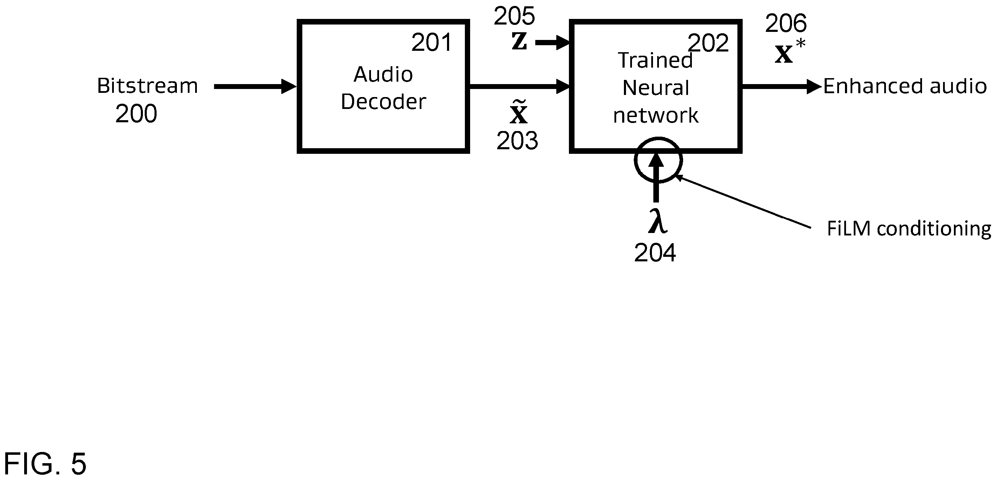

Referring to the example of Figure 5, in some embodiments, the method may further include receiving an audio bitstream, 200, the audio bitstream, 200, including the audio signal and the conditioning information. In this case, the method may further include core decoding the audio bitstream, by an audio decoder, 201, for example, to obtain the audio signal, 203. And the method may include extracting the conditioning information, 204, from the received bitstream, 200. In an example embodiment, the audio bitstream may include metadata, and the conditioning information may be included in the metadata or the metadata may be indicative of the conditioning information. The trained neural network, 202, may then be conditioned based on the extracted conditioning information, 204. The audio signal, 203, and optionally a random noise vector z, 205, may then be input into the trained and conditioned neural network, 202, for processing the audio signal, 203. As an output from the trained and conditioned neural network, 202, a processed audio signal, 206, is then obtained.

Alternatively, in some embodiments, the method may further include analyzing the audio signal, 203, and determining the conditioning information, 204, based on the results of the analysis. Referring again to the example of Figure 4, in step S202, the audio signal is input into the conditioned neural network for processing the audio signal. In step S203, the conditioned neural network then processes the audio signal based on the conditioning information. And, as an output from the conditioned neural network, in step S204, an enhanced audio signal is then obtained.

In some embodiments, the method may be performed in a perceptually weighted domain. A processed audio signal in the perceptually weighted domain may then be obtained as an output from the conditioned neural network. In this case, the method may further include converting the processed audio signal from the perceptually weighted domain to an original signal domain. In some embodiments, the neural network may have also been trained in the perceptually weighted domain.

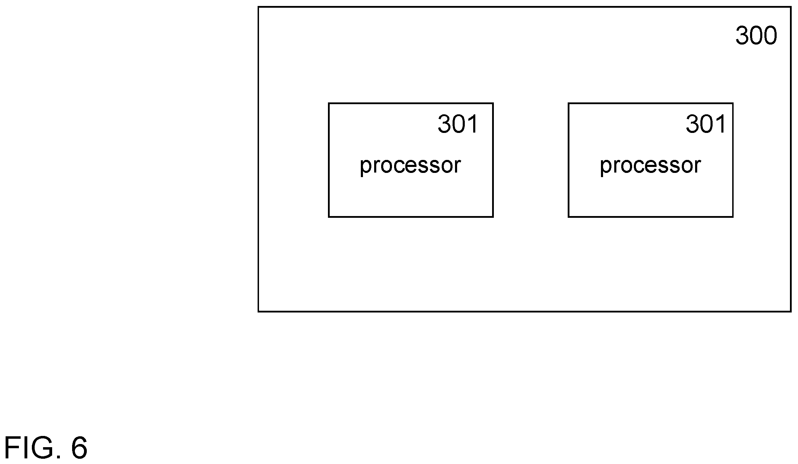

Referring to the example of Figure 6, the above-described method may be implemented by an apparatus for processing an audio signal using a loss conditional trained neural network. The apparatus, 300, may include one or more processors, 301, configured to perform the method described above.

Alternatively, or additionally, the methods as described herein may also be implemented by a computer program comprising instructions that, when executed by a computing device, cause the computing device to perform the methods described herein. The computer program may be provided on a computer-readable storage medium storing the computer program.

Results have shown that a neural network that has been trained as described herein is able to generate outputs (processed audio signals) for different content types/bitrates/codecs that are as good as outputs that would otherwise be generated by individual neural networks that had been trained on their respective specific task. That is, methods and apparatus as described herein allow training and inferencing a single neural network for tasks that would normally require a large set of separately trained neural networks. This one versus many approach offers a simple way to improve efficiency of training and inferencing. Specifically, the approach reduces memory consumption at the decoder side as only one neural network needs to be stored.

*Interpretation*

Unless specifically stated otherwise, as apparent from the following discussions, it is appreciated that throughout the disclosure discussions utilizing terms such as "processing", "computing", "determining", "analyzing" or the like, refer to the action and/or processes of a computer or computing system, or similar electronic computing devices, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one example embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The processing system may also encompass a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one or more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code. Furthermore, a computer-readable carrier medium may form, or be included in a computer program product.

In alternative example embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a personal computer (PC), a tablet PC, a Personal Digital Assistant (PDA), a cellular telephone, a web appliance, a network router, switch or bridge, or any machine capable of executing a set of instructions (sequential or otherwise) that specify actions to be taken by that machine.

Note that the term "machine" shall also be taken to include any collection of machines that individually or jointly execute a set (or multiple sets) of instructions to perform any one or more of the methodologies discussed herein.

Thus, one example embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, example embodiments of the present disclosure may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present disclosure may take the form of a method, an entirely hardware example embodiment, an entirely software example embodiment or an example embodiment combining software and hardware aspects. Furthermore, the present disclosure may take the form of carrier medium (e.g., a computer program product on a computer-readable storage medium) carrying computer-readable program code embodied in the medium.

The software may further be transmitted or received over a network via a network interface device. While the carrier medium is in an example embodiment a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present disclosure. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media may also take the form of acoustic or light waves, such as those generated during radio wave and infrared data communications. For example, the term "carrier medium" shall accordingly be taken to include, but not be limited to, solid-state memories, a computer product embodied in optical and magnetic media; a medium bearing a propagated signal detectable by at least one processor or one or more processors and representing a set of instructions that, when executed, implement a method; and a transmission medium in a network bearing a propagated signal detectable by at least one processor of the one or more processors and representing the set of instructions.

It will be understood that the steps of methods discussed are performed in one example embodiment by an appropriate processor (or processors) of a processing (e.g., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

Reference throughout this disclosure to "one embodiment", "some embodiments" or "an example embodiment" means that a particular feature, structure or characteristic described in connection with the embodiment is included in at least one embodiment of the present disclosure. Thus, appearances of the phrases "in one embodiment", "in some embodiments" or "in an example embodiment" in various places throughout this disclosure are not necessarily all referring to the same example embodiment. Furthermore, the particular features, structures or characteristics may be combined in any suitable manner, as would be apparent to one of ordinary skill in the art from this disclosure, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of example embodiments of the disclosure, various features of the disclosure are sometimes grouped together in a single example embodiment, Fig., or description thereof for the purpose of streamlining the disclosure and aiding in the understanding of one or more of the various inventive aspects. This method of disclosure, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this disclosure.

Furthermore, while some example embodiments described herein include some but not other features included in other example embodiments, combinations of features of different example embodiments are meant to be within the scope of the disclosure, and form different example embodiments, as would be understood by those skilled in the art. For example, in the following claims, any of the claimed example embodiments can be used in any combination.

In the description provided herein, numerous specific details are set forth. However, it is understood that example embodiments of the disclosure may be practiced without these specific details. In other instances, well-known methods, structures and techniques have not been shown in detail in order not to obscure an understanding of this description.

Thus, while there has been described what are believed to be the best modes of the disclosure, those skilled in the art will recognize that other and further modifications may be made thereto without departing from the scope of the appended claims.

## Claims

1. A computer-implemented method of processing an audio signal using a loss conditional trained neural network, the method including:

   conditioning (S201) the neural network based on conditioning information including a coefficient vector, wherein elements of the coefficient vector are indicative of weight coefficients corresponding to loss terms of a loss function;
   inputting (S202) the audio signal into the conditioned neural network for processing the audio signal;
   processing (S203), by the conditioned neural network, the audio signal based on the conditioning information; and
   obtaining (S204), as an output from the conditioned neural network, an enhanced audio signal.

2. The method according to claim 1, wherein the loss function is a multi-objective loss function.

3. The method according to claim 1 or 2, wherein the conditioning information is based on a content type and/or a bitrate of the audio signal.

4. The method according to any one of claims 1 to 3, wherein conditioning the neural network includes Feature-wise Linear Modulation, FiLM.

5. The method according to any one of claims 1 to 4, wherein the neural network implements a deep-learning based generator, the generator comprising an encoder stage and a decoder stage, each including multiple layers with one or more filters in each layer, the last layer of the encoder stage mapping to a latent feature space.

6. The method according to claim 5, wherein conditioning the neural network involves conditioning on one or more layers of the encoder stage of the generator adjacent to the latent feature space.

7. The method according to claim 5 or 6, wherein a random noise vector z is applied to the latent feature space for modifying audio.

8. The method according to any one of claims 1 to 7, wherein the method further includes receiving an audio bitstream including the audio signal and the conditioning information.

9. The method according to claim 8, wherein the method further includes core decoding the audio bitstream to obtain the audio signal, and wherein optionally the method further includes extracting the conditioning information from the received bitstream.

10. The method according to any one of claims 1 to 9, wherein the method further includes analyzing the audio signal and determining the conditioning information based on the results of the analysis.

11. The method according to any one of claims 1 to 10, wherein the method is performed in a perceptually weighted domain, and wherein an enhanced audio signal in the perceptually weighted domain is obtained as an output from the conditioned neural network, wherein optionally the method further includes converting the enhanced audio signal from the perceptually weighted domain to an original signal domain.

12. The method according to any one of claims 1 to 11, wherein the neural network has been trained in the perceptually weighted domain.

13. An apparatus (300) for processing an audio signal using a loss conditional trained neural network, the apparatus (300) including one or more processors (301) configured to perform a method including:

conditioning (S201) the neural network based on conditioning information including a coefficient vector, wherein elements of the coefficient vector are indicative of weight coefficients corresponding to loss terms of a loss function;
inputting (S202) the audio signal into the conditioned neural network for processing the audio signal;
processing (S203), by the conditioned neural network, the audio signal based on the conditioning information; and
obtaining (S204), as an output from the conditioned neural network, an enhanced audio signal.

14. A computer program comprising instructions that, when executed by a computing device, cause the computing device to perform the method according to any one of claims 1 to 12.

15. A computer-readable storage medium storing the computer program according to claim 14.

**Patentansprüche**

1. Computerimplementiertes Verfahren zum Verarbeiten eines Audiosignals unter Verwendung eines verlustbedingt trainierten neuronalen Netzes, wobei das Verfahren Folgendes einschließt:

Konditionieren (S201) des neuronalen Netzes auf der Grundlage von Konditionierungsinformationen, einschließlich eines Koeffizientenvektors, wobei Elemente des Koeffizientenvektors Gewichtungskoeffizienten angeben, die den Verlusttermen einer Verlustfunktion entsprechen;
Eingeben (S202) des Audiosignals in das konditionierte neuronale Netz zum Verarbeiten des Audiosignals;
Verarbeiten (S203), durch das konditionierte neuronale Netz, des Audiosignals auf der Grundlage der Konditionierungsinformationen; und
Erhalten (S204), als eine Ausgabe vom konditionierten neuronalen Netz, eines verbesserten Audiosignals.

2. Verfahren nach Anspruch 1, wobei die Verlustfunktion eine Mehrzielverlustfunktion ist.

3. Verfahren nach Anspruch 1 oder 2, wobei die Konditionierungsinformationen auf einem Inhaltstyp und/oder einer Bitrate des Audiosignals basieren.

4. Verfahren nach einem der Ansprüche 1 bis 3, wobei Konditionieren des neuronalen Netzes merkmalsweise lineare Modulation (FiLM) einschließt.

5. Verfahren nach einem der Ansprüche 1 bis 4, wobei das neuronale Netz einen auf Deep Learning basierenden Generator implementiert, der Generator eine Encoderstufe und eine Decoderstufe umfasst, die jeweils mehrere Schichten mit einem oder mehreren Filtern in jeder Schicht einschließen, wobei die letzte Schicht der Encoderstufe auf einen latenten Merkmalsraum abbildet.

6. Verfahren nach Anspruch 5, wobei Konditionieren des neuronalen Netzes ein Konditionieren auf einer oder mehreren Schichten der Encoderstufe des Generators einbezieht, die an den latenten Merkmalsraum angrenzen.

7. Verfahren nach Anspruch 5 oder 6, wobei ein Zufallsrauschvektor z auf den latenten Merkmalsraum angewendet wird, um Audio zu modifizieren.

8. Verfahren nach einem der Ansprüche 1 bis 7, wobei das Verfahren ferner Empfangen eines Audiobitstroms einschließt, der das Audiosignal und die Konditionierungsinformationen einschließt.

9. Verfahren nach Anspruch 8, wobei das Verfahren ferner Kerndecodieren des Audiobitstroms einschließt, um das Audiosignal zu erhalten, und wobei das Verfahren optional ferner Extrahieren der Konditionierungsinformationen aus dem empfangenen Bitstrom einschließt.

10. Verfahren nach einem der Ansprüche 1 bis 9, wobei das Verfahren ferner Analysieren des Audiosignals und Bestimmen der Konditionierungsinformationen basierend auf den Ergebnissen der Analyse einschließt.

11. Verfahren nach einem der Ansprüche 1 bis 10, wobei das Verfahren in einem wahrnehmungsgewichteten Bereich durchgeführt wird und wobei ein verbessertes Audiosignal im wahrnehmungsgewichteten Bereich als eine Ausgabe des konditionierten neuronalen Netzes erhalten wird, wobei das Verfahren optional ferner Umwandeln des verbesserten Audiosignals vom wahrnehmungsgewichteten Bereich in einen ursprünglichen Signalbereich einschließt.

12. Verfahren nach einem der Ansprüche 1 bis 11, wobei das neuronale Netz im wahrnehmungsgewichteten Bereich trainiert wurde.

13. Einrichtung (300) zum Verarbeiten eines Audiosignals unter Verwendung eines verlustbedingt trainierten neuronalen Netzes, wobei die Einrichtung (300) einen oder mehrere Prozessoren (301) einschließt, die zum Durchführen eines Verfahrens konfiguriert sind, einschließend:

Konditionieren (S201) des neuronalen Netzes auf der Grundlage von Konditionierungsinformationen, einschließlich eines Koeffizientenvektors, wobei Elemente des Koeffizientenvektors Gewichtungskoeffizienten angeben, die den Verlusttermen einer Verlustfunktion entsprechen;
Eingeben (S202) des Audiosignals in das konditionierte neuronale Netz zum Verarbeiten des Audiosignals;
Verarbeiten (S203), durch das konditionierte neuronale Netz, des Audiosignals auf der Grundlage der Konditionierungsinformationen; und
Erhalten (S204), als eine Ausgabe vom konditionierten neuronalen Netz, eines verbesserten Audiosignals.

14. Computerprogramm, das Anweisungen umfasst, die, wenn sie von einer Rechenvorrichtung ausgeführt werden, die Rechenvorrichtung veranlassen, das Verfahren nach einem der Ansprüche 1 bis 12 durchzuführen.

15. Computerlesbares Speichermedium, das das Computerprogramm nach Anspruch 14 speichert.

**Revendications**

1. Procédé informatique de traitement d'un signal audio utilisant un réseau neuronal entraîné conditionnellement à la perte, ce procédé incluant :

le conditionnement (S201) du réseau neuronal basé sur des informations de conditionnement incluant un vecteur de coefficients, dans lequel les éléments du vecteur de coefficients sont indicatifs des coefficients de pondération correspondant aux termes de perte d'une fonction de perte ;
l'entrée (S202) du signal audio dans le réseau neuronal conditionné pour traiter le signal audio ;
le traitement (S203), par le réseau neuronal conditionné, du signal audio basé sur les informations de conditionnement ; et
l'obtention (S204), comme résultat du réseau neuronal conditionné, d'un signal audio amélioré.

2. Procédé selon la revendication 1, dans lequel la fonction de perte est une fonction de perte multi-objectif.

3. Procédé selon la revendication 1 ou 2, dans lequel les informations de conditionnement sont basées sur un type de contenu et/ou sur le débit binaire du signal audio.

4. Procédé selon l'une quelconque des revendications 1 à 3, dans lequel le conditionnement du réseau neuronal inclut une modulation linéaire par caractéristique, FiLM.

5. Procédé selon l'une quelconque des revendications 1 à 4, dans lequel le réseau neuronal met en œuvre un générateur basé sur l'apprentissage profond, le générateur comprenant un étage d'encodeur et un étage de décodeur, chacun incluant plusieurs couches avec un ou plusieurs filtres dans chaque couche, la dernière couche de l'étage d'encodeur mappant sur un espace de caractéristiques latentes.

6. Procédé selon la revendication 5, dans lequel le conditionnement du réseau neuronal implique un conditionnement sur une ou plusieurs couches de l'étage d'encodage du générateur adjacentes à l'espace des caractéristiques latentes.

7. Procédé selon la revendication 5 ou 6, dans lequel un vecteur de bruit aléatoire z est appliqué à l'espace des caractéristiques latentes pour modifier l'audio.

8. Procédé selon l'une quelconque des revendications 1 à 7, dans lequel le procédé inclut en outre la réception d'un flux binaire audio incluant le signal audio et les informations de conditionnement.

9. Procédé selon la revendication 8, dans lequel le procédé inclut en outre le décodage de base du flux binaire audio pour obtenir le signal audio, et dans lequel le procédé inclut en option l'extraction des informations de conditionnement du flux binaire reçu.

10. Procédé selon l'une quelconque des revendications 1 à 9, dans lequel le procédé inclut en outre l'analyse du signal audio et la détermination des informations de conditionnement sur la base des résultats de l'analyse.

11. Procédé selon l'une quelconque des revendications 1 à 10, dans lequel le procédé est exécuté dans un domaine pondéré perceptuellement, et dans lequel un signal audio amélioré dans le domaine pondéré perceptuellement est obtenu comme résultat du réseau neuronal conditionné, dans lequel le procédé inclut en outre en option la conversion du signal audio amélioré du domaine pondéré perceptuellement vers un domaine de signal original.

12. Procédé selon l'une quelconque des revendications 1 à 11, dans lequel le réseau neuronal a été entraîné dans le domaine pondéré perceptuellement.

13. Appareil (300) pour le traitement d'un signal audio à l'aide d'un réseau neuronal entraîné conditionnellement à la perte, l'appareil (300) incluant un ou plusieurs processeurs (301) configurés pour exécuter un procédé incluant :

le conditionnement (S201) du réseau neuronal basé sur des informations de conditionnement incluant un vecteur de coefficients, dans lequel les éléments du vecteur de coefficients sont indicatifs des coefficients de pondération correspondant aux termes de perte d'une fonction de perte ;
l'entrée (S202) du signal audio dans le réseau neuronal conditionné pour traiter le signal audio ;
le traitement (S203), par le réseau neuronal conditionné, du signal audio basé sur les informations de conditionnement ; et
l'obtention (S204), comme résultat du réseau neuronal conditionné, d'un signal audio amélioré.

14. Programme informatique comprenant des instructions qui, lorsqu'elles sont exécutées par un dispositif informatique, amènent ce dernier à exécuter le procédé selon l'une quelconque des revendications 1 à 12.

15. Support de stockage lisible par ordinateur stockant le programme informatique selon la revendication 14.

```
┌──────────────────────────────────────────────┐
│ randomly sampling a coefficient vector from a  │
│ distribution of coefficients, wherein elements │   S101
│ of the coefficient vector are indicative of    │
│ weight coefficients of a loss function         │
└──────────────────────────────────────────────┘
                      │
                      ▼
┌──────────────────────────────────────────────┐
│ conditioning a neural network based on         │   S102
│ the coefficient vector                         │
└──────────────────────────────────────────────┘
                      │
                      ▼
┌──────────────────────────────────────────────┐
│ training the conditioned neural network based  │
│ on an audio training signal, wherein the       │
│ training involves calculating the loss function│   S103
│ for the audio training signal after processing │
│ by the conditioned neural network, using the   │
│ weight coefficients indicated by the coefficient vector │
└──────────────────────────────────────────────┘
```

FIG. 1

FIG. 2

FIG. 3

EP 4 537 333 B1

```
┌─────────────────────────────────────────────┐
│     conditioning the neural network based on   │   S201
│ conditioning information including a coefficient vector │
└─────────────────────────────────────────────┘
                      │
                      ▼
┌─────────────────────────────────────────────┐
│      inputting the audio signal into the conditioned │   S202
│      neural network for processing the audio signal   │
└─────────────────────────────────────────────┘
                      │
                      ▼
┌─────────────────────────────────────────────┐
│       processing, by the conditioned neural network,  │   S203
│   the audio signal based on the conditioning information │
└─────────────────────────────────────────────┘
                      │
                      ▼
┌─────────────────────────────────────────────┐
│        obtaining, as an output from the conditioned   │   S204
│         neural network, a processed audio signal      │
└─────────────────────────────────────────────┘
```

FIG. 4

FIG. 5

EP 4 537 333 B1

```
                            ┌─────────────────────────────────────┐
                            │                               300   │
                            │                                     │
                            │  ┌──────────────┐  ┌──────────────┐ │
                            │  │         301  │  │         301  │ │
                            │  │  processor   │  │  processor   │ │
                            │  │              │  │              │ │
                            │  └──────────────┘  └──────────────┘ │
                            │                                     │
                            └─────────────────────────────────────┘
```

FIG. 6

# EP 4 537 333 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63350099
- EP 22177849
- WO 2021245015 A1

**Non-patent literature cited in the description**

- **POLYAK ADAM et al.** *High Fidelity Speech Regeneration with Application to Speech Enhancement*
- **RAM SARAVANA RAM**. *Speech enhancement through improvised conditional generative adversarial networks*